# EUROPEAN PATENT APPLICATION

(11) **EP 2 654 309 A1**
(43) Date of publication of application: **23.10.2013**
(21) Application number: 11859750.9
(22) Date of filing: 26.11.2011
(51) Int. Cl.: H04N 17/04

(54) **METHOD AND DEVICE FOR EVALUATING VIDEO QUALITY**

(30) Priority: 28.02.2011 CN 201110048491
(71) Applicant: Huawei Technologies Co., Ltd., Shenzhen, Guangdong 518129 (CN)
(72) Inventor: HU, Yinliang, Shenzhen Guangdong 518129 (CN); LIU, Jitao, Shenzhen Guangdong 518129 (CN); YANG, Youqing, Shenzhen Guangdong 518129 (CN); YU, Wenxiao, Shenzhen Guangdong 518129 (CN)
(74) Representative: Thun, Clemens
(86) International application number: PCT/CN2011/082998
(87) International publication number: WO 2012/116558

(57) **Abstract**

Embodiments of the present invention discloses a method and an apparatus for evaluating video quality, which relate to the field of communications technologies, and are invented for improving accuracy of evaluating quality of an IPTV service. The method includes: acquiring a channel video stream; acquiring a decoding feature parameter of a decoder, where the decoding feature parameter at least includes a decoding buffer capacity; acquiring a frame information loss ratio according to the decoding feature parameter, and acquiring mean opinion score-video MOS-V parameters according to the channel video stream; and acquiring a MOS-V value of the channel video stream according to the frame information loss ratio and the MOS-V parameters. The embodiments of the present invention are mainly applied to a technology for evaluating video quality.

## Description

This application claims priority to Chinese Patent Application No. 201110048491.3, filed with the Chinese Patent Office on February 28, 2011 and entitled "METHOD AND APPARATUS FOR EVALUATING VIDEO QUALITY", which is incorporated herein by reference in its entirety.

### TECHNICAL FIELD

The present invention relates to the field of communications technologies, and in particular, to a method and an apparatus for evaluating video quality.

### BACKGROUND

With the development of communications technologies, an IPTV (Internet Protocol Television, Internet Protocol television) service, as a telecommunication service, has entered a large-scale commercial stage. At present, quality of the IPTV service is generally evaluated by calculating a MOS-V (Mean Opinion Score-Video, mean opinion score-video) value. During the calculation of the MOS-V value, parameters considered generally include KPI (Key Performance Indication, key performance indication) parameters of a network and the service, such as frame size, frame information loss ratio, frame type, content richness, mobility, scene change, and other parameters.

However, during the implementation of the present invention, the inventor finds that a decoding feature parameter of a decoder is not considered in an existing method for calculating the MOS-V value. As a result, accuracy of the calculated MOS-V value is not high, and accuracy of evaluating the quality of the IPTV service is not high.

### SUMMARY

Embodiments of the present invention provide a method and an apparatus for evaluating video quality to improve accuracy of evaluating quality of an IPTV service.

The embodiments of the present invention adopt the following technical solutions:
A method for evaluating video quality includes:
   acquiring a channel video stream;
   acquiring a decoding feature parameter of a decoder, where the decoding feature parameter at least includes a decoding buffer capacity;
   acquiring a frame information loss ratio according to the decoding feature parameter, and acquiring mean opinion score-video MOS-V parameters according to the channel video stream; and
   acquiring a MOS-V value of the channel video stream according to the frame information loss ratio and the MOS-V parameters.

An apparatus for evaluating video quality includes:
a video stream acquiring unit, configured to acquire a channel video stream;
a first parameter acquiring unit, configured to acquire a decoding feature parameter of a decoder, where the decoding feature parameter at least includes a decoding buffer capacity;
a second parameter acquiring unit, configured to acquire a frame information loss ratio according to the decoding feature parameter, and acquire MOS-V parameters according to the channel video stream; and
a MOS-V value acquiring unit, configured to acquire a MOS-V value of the channel video stream according to the frame information loss ratio and the MOS-V parameters.

According to the method and the apparatus for evaluating video quality that are provided in the embodiments of the present invention, a channel video stream is acquired; a decoding feature parameter of a decoder is acquired, where the decoding feature parameter at least includes a decoding buffer capacity; a frame information loss ratio is acquired according to the decoding feature parameter, and mean opinion score-video MOS-V parameters are acquired according to the channel video stream; and a MOS-V value of the channel video stream is acquired according to the frame information loss ratio and the MOS-V parameters. The decoding buffer capacity of the decoder has a great impact on accuracy of the frame information loss ratio. Therefore, the accuracy of the frame information loss ratio may be improved by considering the decoding feature parameter of the decoder during calculation of the MOS-V value, thereby acquiring an accurate MOS-V value. Therefore, accuracy of evaluating quality of an IPTV service is improved by using the technical solutions in the embodiments of the present invention.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a flowchart of a method for evaluating video quality according to a first embodiment of the present invention;
FIG. 2 is a schematic diagram of a method for evaluating video quality according to a second embodiment of the present invention;
FIG. 3 is a schematic diagram of a method for evaluating video quality according to a third embodiment of the present invention;
FIG. 4 is a schematic diagram of a method for evaluating video quality according to a fourth embodiment of the present invention;
FIG. 5 is a schematic diagram of an apparatus for evaluating video quality according to a fifth embodiment of the present invention;
FIG. 6 is a schematic diagram of a MOS-V value acquiring unit according to the fifth embodiment of the present invention;
FIG. 7 is a schematic diagram of a loss ratio acquiring module according to the fifth embodiment of the present invention; and
FIG. 8 is another schematic diagram of an apparatus for evaluating video quality according to the fifth embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

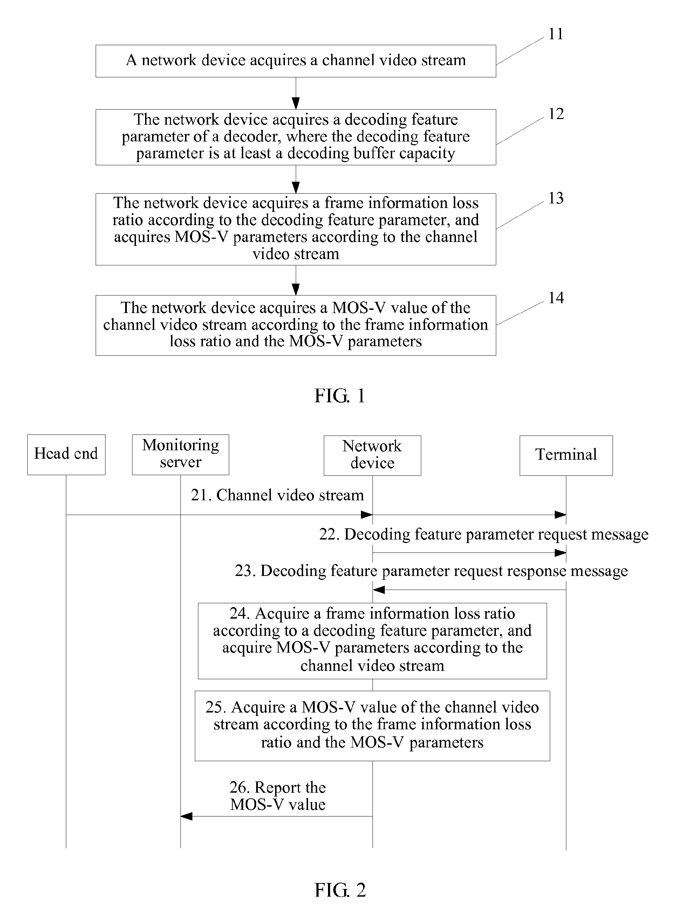

As shown in FIG. 1, a first embodiment of the present invention provides a method for evaluating video quality, including the following steps:
Step 11: A network device acquires a channel video stream.

In this embodiment, the channel video stream is sent from a head end and arrives at a decoder of a terminal through the network device. The terminal may include various decoding devices, such as a television, a personal computer, a tablet computer, a mobile phone, a set-top box (set-top box, STB), and a multimedia player. The decoder is a hardware or software decoding module in the terminal. The decoder decodes acquired video stream information, which may be further displayed by a display device. A network monitoring device may be set in the network device, and the network monitoring device may be integrated in the network device as a monitoring module and directly acquire channel video stream information. Alternatively, the network monitoring device may be mounted beside the network device as a separated component, and in this case, the monitoring device may acquire a channel video stream from the network device by using port mirroring or another method.

Step 12: The network device acquires a decoding feature parameter of the decoder, where the decoding feature parameter at least includes a decoding buffer capacity.

In this embodiment, the network monitoring device is integrated in the network device as a monitoring module, and a video monitoring function is enabled. The decoding buffer capacity refers to an actual decoding buffer capacity of the decoder that plays the channel video stream.

The network device may acquire the decoding feature parameter of the decoder from the terminal or a monitoring server. The specific manners may be as follows:
Manner 1: The network device sends a decoding feature parameter request message to the terminal, and receives a decoding feature parameter request response message sent by the terminal, where the decoding feature parameter request response message includes the decoding feature parameter.
Manner 2: When the decoder joins a multicast group, the network device receives the decoding feature parameter sent by the terminal.
Manner 3: The network device sends a decoding feature parameter request message to the monitoring server, and receives a decoding feature parameter request response message sent by the monitoring server, where the decoding feature parameter request response message includes the decoding feature parameter.

According to the preceding description, in Manner 1 and Manner 3, the network device needs to send a decoding feature parameter request message to the terminal or the monitoring server respectively, so as to acquire the decoding feature parameter. In Manner 2, however, the network device does not need to send a decoding feature parameter request message to the terminal or the monitoring server; instead, the network device directly receives the decoding feature parameter sent by the terminal.

In addition, when decoders of multiple types exist in the downstream of the network device, the monitoring server may monitor a decoder of a specified type as required, or monitor the decoders of the multiple types at the same time.

Step 13: The network device acquires a frame information loss ratio according to the decoding feature parameter, and acquires mean opinion score-video MOS-V parameters according to the channel video stream.

In this embodiment, the network device first creates a virtual decoding buffer according to the acquired decoding buffer capacity, and a capacity of the virtual decoding buffer is consistent with a decoding buffer capacity of an actual decoder. Therefore, the total number of packets that can be stored in the virtual decoding buffer is consistent with the total number of packets that can be stored in a decoding buffer of the decoder. The virtual decoding buffer may perform virtualization of the behavior of storing a packet in the channel video stream by the decoding buffer of the decoder of the terminal. The virtual decoding buffer may store a complete packet. In addition, the virtual decoding buffer only needs to perform virtualization of a decoding behavior, and therefore it may store only key information of the packet, such as the length of the packet, a sequence number of the packet, and each packet feature information of a TS (Transport Stream, transport stream). The packet feature information of a TS includes a TS CC (Continuity Counter, continuity counter) field value and information about whether a TS includes frame header information, frame type, frame QP (Quantization Parameter, quantization parameter), or the like. The network device may acquire the key information of the packet by parsing and acquiring the video stream information, or directly acquire the key information of the packet via the head end or another network device.

When performing virtualization of buffering and decoding behaviors of the decoder, the virtual decoding buffer detects packets in the video stream to determine whether a packet loss is caused due to situations such as a network packet loss, a delay, a jitter, and disorder, or whether overflow or underflow occurs during decoding buffer of the decoder, thereby accurately calculating the frame information loss ratio.

In the prior art, the frame information loss ratio is calculated mainly based on whether a packet loss occurs on a network. However, in practice, for a packet with a high delay, although no packet loss occurs on the network, the packet with a high delay may miss a decoding opportunity when the decoder periodically reads data according to an FPS (Frames Per Second, frames per second) rate, and this is equivalent to a packet loss. In addition, when video streams burst, although no packet loss occurs on the network, the decoding buffer of the decoder overflows due to high burst traffic, and the overflowed packets are also equivalent to lost packets. The network device may also determine, according to the decoding buffer capacity, whether a packet loss occurs on the decoder in this situation. The virtual decoding buffer may correctly detect a true frame information loss condition of the decoder by performing virtualization of the buffering and decoding behaviors of the decoder, thereby improving accuracy of calculating the frame information loss ratio.

To improve accuracy of monitoring by a network server, the decoding feature parameter may further include an error concealment manner parameter. Different error concealment manners of the decoder bring different experience to a terminal user, resulting in different MOS-V values. Specifically, when a packet loss occurs on a video frame, the decoder generally has the following two error concealment manners:
Manner 1: The decoder continues to perform decoding, and error decoding information is displayed as artifacts, so that the display device displays an image fluently.
Manner 2: After a decoding error occurs, the display device does not display information about a current frame and continues to play information about a last frame that is correctly decoded, thereby ensuring that no artifact exists in an image played by the display device. However, a standstill may occur on the image.

The terminal acquires the error concealment manner parameter according to the error concealment manner of the decoder and reports the error concealment manner parameter to the network device.

Further, the network device may acquire the MOS-V parameters of the video stream according to key information of a video packet that is stored in the virtual decoding buffer. The MOS-V parameters include parameters such as frame size, frame type, content richness, mobility, and scene change.

Step 14: The network device acquires a MOS-V value of the channel video stream according to the frame information loss ratio and the MOS-V parameters.

When the network device calculates the MOS-V value, the MOS-V value of the channel video stream acquired based on the frame information loss ratio is more accurate because the frame information loss ratio is more accurate.

Further, if the decoding feature parameter of the decoder further includes the error concealment manner parameter, the network device acquires the MOS-V value of the channel video stream according to the frame information loss ratio, the error concealment manner parameter, and the MOS-V parameters. In this case, the network device may select, according to the error concealment manner parameter, a MOS-V value calculation method suitable for the error concealment manner of the terminal, and acquire a more accurate MOS-V value of the channel video stream based on the frame information loss ratio and the MOS-V parameters.

The MOS-V value is generally a value ranging from 1 to 5. A larger value indicates better IPTV user experience. Generally, IPTV quality with a MOS-V value above 3.6 is acceptable for a user.

To facilitate video quality monitoring for an operator or another maintenance department, after acquiring the MOS-V value, the network device may periodically reports the MOS-V value to the monitoring server.

In addition, a working process of the network monitoring device mounted beside the network device as a separated component is similar to a working process of the network monitoring device integrated in the network device as a monitoring module, and the details will not be described herein again.

As can be seen from the preceding description, a decoding buffer capacity of a decoder has a great impact on accuracy of a frame information loss ratio. Therefore, the accuracy of the frame information loss ratio may be improved by considering a decoding feature parameter of the decoder during calculation of a MOS-V value, thereby acquiring an accurate MOS-V value. In addition, multiple network devices may be used to monitor video stream information to determine an exact location of a video stream fault. Therefore, accuracy of evaluating quality of an IPTV service is improved by using the technical solution in the embodiment of the present invention.

The following describes the method for evaluating video quality in the embodiment of the present invention in detail with reference to a specific embodiment.

As shown in FIG. 2, a second embodiment of the present invention provides a method for evaluating video quality, including the following steps:
Step 21: A network device acquires a channel video stream.
For this step, reference may be made to step 11 in the first method embodiment.
Step 22: The network device sends a decoding feature parameter request message to a terminal.
Step 23: The network device receives a decoding feature parameter request response message sent by the terminal, where the decoding feature parameter request response message includes a decoding feature parameter.

In this embodiment, the decoding feature parameter at least includes a decoding buffer capacity.

Step 24: The network device acquires a frame information loss ratio according to the decoding feature parameter, and acquires MOS-V parameters according to the channel video stream.

In this embodiment, the network device first creates a virtual decoding buffer according to the acquired decoding buffer capacity, and performs virtualization of a decoding behavior of the decoder to detect a damage condition of the video stream by using the virtual decoding buffer. Specifically, when the amount of data in the virtual decoding buffer reaches a specified data amount, the network device performs virtualization of the decoding behavior of the decoder and reads data in the virtual decoding buffer according to an FPS (Frames Per Second, frames per second) rate. For example, if the FPS is 25, the network device reads one data frame out of the virtual decoding buffer each 40 ms. The so-called "reads out of" refers to deleting key packet information of the data frame in the virtual decoding buffer, so that the virtual decoding buffer can be used in a cyclic manner. When the network device "reads" a data frame "out", it is determined, according to sequence numbers of packets, whether a packet loss occurs on the packets. If the sequence numbers of the packets are not consecutive, a packet loss occurs on the packets. If the sequence numbers of the packets are consecutive, it is determined, by combining an overflow or underflow condition, whether a packet loss occurs on the packets, thereby calculating an accurate frame information loss ratio. The details will be described below.

If an upstream link is faulty or a delay is excessively high, the network device cannot read a data frame out of the virtual decoding buffer within a periodic reading time, that is, the network device cannot acquire corresponding frame information when performing virtualization of the decoding behavior of the decoder. In this case, the virtual decoding buffer underflows. As a result, the network device cannot read frame information. The periodic reading time may be acquired by using the FPS, for example, if the FPS is 25, the periodic reading time is 40 ms.

If a burst occurs on the upstream link, and a transmission rate of the video stream is excessively high, the virtual decoding buffer may overflow, that is, a newly arriving packet is regarded as being discarded when the network device performs virtualization of the decoding behavior of the decoder, because the newly arriving packet cannot be buffered into the virtual decoding buffer. This is counted as a packet loss.

In addition, to improve accuracy of monitoring by a network server, the decoding feature parameter may further include an error concealment manner parameter. When an information loss occurs on video frame information due to a network packet loss or buffer overflow, an error concealment manner of the decoder may be as follows: The decoder continues to perform decoding, and error decoding information is displayed as artifacts, so that the display device displays an image fluently; alternatively, after a decoding error occurs, the display device does not display information about a present frame and continues to stop at information about a last frame that is correctly decoded, thereby ensuring that no artifact exists in an image played by the display device. However, a standstill may occur on the image. Further, the network device acquires the error concealment manner parameter according to the error concealment manner.

In this embodiment, the network device may acquire the MOS-V parameters of the video stream according to key information of a video packet stored in the virtual decoding buffer. The MOS-V parameters include parameters such as frame size, frame type, content richness, mobility, and scene change.

Step 25: The network device acquires a MOS-V value of the channel video stream according to the frame information loss ratio and the MOS-V parameters.

For this step, reference may be made to step 14 in the first method embodiment.

Step 26: The network device reports the MOS-V value to a monitoring server.

To facilitate video quality monitoring for an operator or another maintenance department, after acquiring the MOS-V value, the network device may periodically reports the MOS-V value to the monitoring server.

As can be seen from the preceding description, a decoding buffer capacity of a decoder has a great impact on accuracy of a frame information loss ratio. Therefore, the accuracy of the frame information loss ratio may be improved by considering a decoding feature parameter of the decoder during calculation of a MOS-V value, thereby acquiring an accurate MOS-V value. In addition, multiple network devices may be used to monitor video stream information to determine an exact location of a video stream fault. Therefore, accuracy of evaluating quality of an IPTV service is improved by using the technical solution in the embodiment of the present invention.

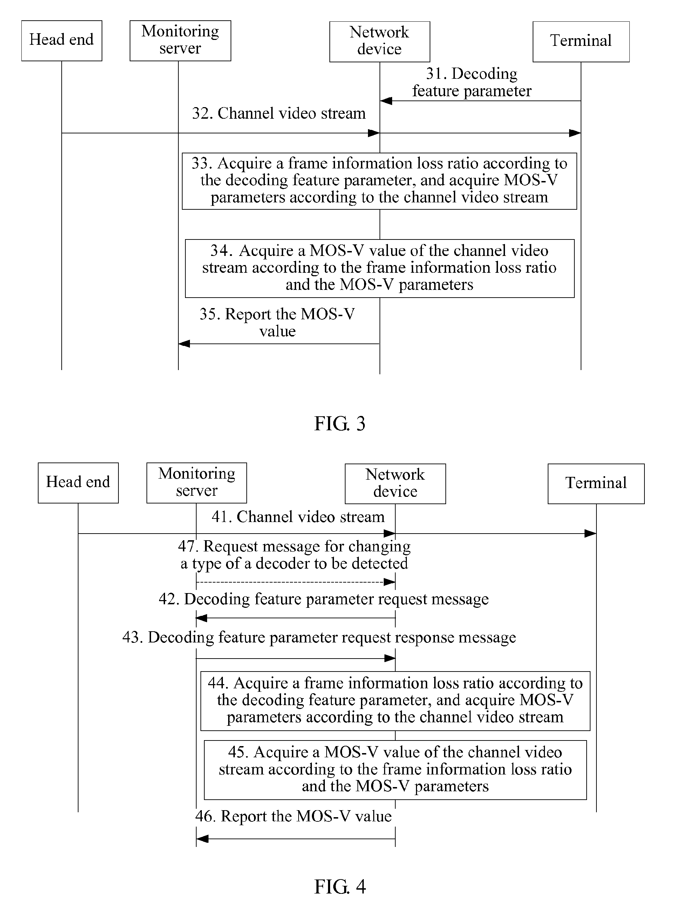

As shown in FIG. 3, a third embodiment of the present invention provides a method for evaluating video quality, including the following steps:
Step 31: A network device receives a decoding feature parameter sent by a terminal.

In this embodiment, when the decoder joins a multicast group, the network device directly receives a message about the joining of the decoder into the multicast group, where the message includes the decoding feature parameter, and the network device does not need to send a decoding feature parameter request message to the decoder. The decoding feature parameter at least includes a decoding buffer capacity.

Step 32: The network device acquires a channel video stream.

For this step, reference may be made to step 11 in the first method embodiment.

Step 33: The network device acquires a frame information loss ratio according to the decoding feature parameter, and acquires MOS-V parameters according to the channel video stream.

For this step, reference may be made to step 24 in the second method embodiment.

Step 34: The network device acquires a MOS-V value of the channel video stream according to the frame information loss ratio and the MOS-V parameters.

For this step, reference may be made to step 14 in the first method embodiment.

Step 35: The network device reports the MOS-V value to a monitoring server.

For this step, reference may be made to step 26 in the second method embodiment.

As can be seen from the preceding description, a decoding buffer capacity of a decoder has a great impact on accuracy of a frame information loss ratio. Therefore, the accuracy of the frame information loss ratio may be improved by considering a decoding feature parameter of the decoder during calculation of a MOS-V value, thereby acquiring an accurate MOS-V value. In addition, multiple network devices may be used to monitor video stream information to determine an exact location of a video stream fault. Therefore, accuracy of evaluating quality of an IPTV service is improved by using the technical solution in the embodiment of the present invention.

As shown in FIG. 4, a fourth embodiment of the present invention provides a method for evaluating video quality, including the following steps:
Step 41: A network device acquires a channel video stream.

For this step, reference may be made to step 11 in the first method embodiment.

Step 42: The network device sends a decoding feature parameter request message to a monitoring server.

Step 43: The network device receives a decoding feature parameter request response message sent by the monitoring server, where the decoding feature parameter request response message includes a decoding feature parameter, and the decoding feature parameter is at least a decoding buffer capacity.

Particularly, to improve flexibility of video quality monitoring, when decoders of multiple types exist in the downstream of the network device, the monitoring server may monitor the decoders of the multiple types at the same time or monitor a decoder of a specified type as required. Specifically, when monitoring a decoder of a specified type as required, the monitoring server sends a decoding feature parameter request response message about the specified type of the decoder, where the decoding feature parameter request response message includes a decoding feature parameter of the specified type of the decoder.

Step 44: The network device acquires a frame information loss ratio according to the decoding feature parameter, and acquires MOS-V parameters according to the channel video stream.

For this step, reference may be made to step 24 in the second method embodiment.

Step 45: The network device acquires a MOS-V value of the channel video stream according to the frame information loss ratio and the MOS-V parameters.

For this step, reference may be made to step 14 in the first method embodiment.

Step 46: The network device reports the MOS-V value to the monitoring server.

For this step, reference may be made to step 26 in the second method embodiment.

As can be seen from the preceding description, a decoding buffer capacity of a decoder has a great impact on accuracy of a frame information loss ratio. Therefore, the accuracy of the frame information loss ratio may be improved by considering a decoding feature parameter of the decoder during calculation of a MOS-V value, thereby acquiring an accurate MOS-V value. In addition, multiple network devices may be used to monitor video stream information to determine an exact location of a video stream fault. Therefore, accuracy of evaluating quality of an IPTV service is improved by using the technical solution in the embodiment of the present invention.

In the fourth embodiment, as shown in FIG. 4, to improve the flexibility of video quality monitoring, when multiple types of decoders exist in the downstream of the network device, the fourth embodiment may further include the following step before the network device sends the decoding feature parameter request message to the monitoring server:
Step 47: The monitoring server sends a request message for changing a type of a decoder to be monitored to the network device.

In this case, the decoding feature parameter request message is used to indicate a request for a decoding feature parameter of the decoder whose type is changed. Specifically, after receiving the request message for changing a type of a decoder to be monitored that is sent by the monitoring server, the network device sends a decoder decoding feature parameter request message to the monitoring server, and receives the decoding feature parameter request response message sent by the monitoring server, where the decoding feature parameter request response message includes the decoding feature parameter of the decoder whose type is changed.

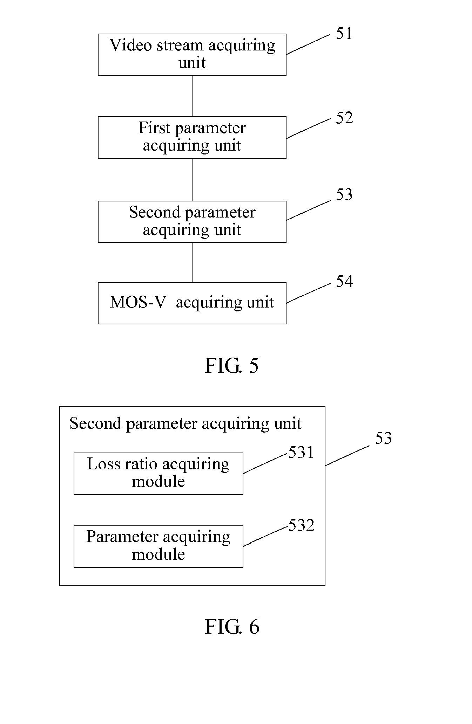

As shown in FIG. 5, a fifth embodiment of the present invention provides an apparatus for evaluating video quality, including: a video stream acquiring unit 51, configured to acquire a channel video stream; a first parameter acquiring unit 52, configured to acquire a decoding feature parameter of a decoder, where the decoding feature parameter is at least a decoding buffer capacity; a second parameter acquiring unit 53, configured to acquire a frame information loss ratio according to the decoding feature parameter, and acquire MOS-V parameters according to the channel video stream; and a MOS-V value acquiring unit 54, configured to acquire a MOS-V value of the channel video stream according to the frame information loss ratio and the MOS-V parameters.

As described in the method embodiment, the first parameter acquiring unit 52 may acquire the decoding feature parameter in at least three manners. Accordingly, the first parameter acquiring unit 52 may specifically include: a first request sending module, configured to send a decoding feature parameter request message to a terminal; and a first message receiving module, configured to receive a decoding feature parameter request response message sent by the terminal, where the decoding feature parameter request response message includes the decoding feature parameter.

Alternatively, the first parameter acquiring unit 52 is specifically configured to receive a message about joining of the terminal into a multicast group, where the message includes the decoding feature parameter.

Alternatively, the parameter acquiring unit 52 may specifically include: a second request sending module, configured to send a decoding feature parameter request message to a monitoring server; and a second message receiving module, configured to receive a decoding feature parameter request response message sent by the monitoring server, where the decoding feature parameter request response message includes the decoding feature parameter.

In addition, to improve flexibility of video quality monitoring, the parameter acquiring unit 52 further includes a third message receiving module, configured to receive a request message for changing a type of a decoder to be monitored that is sent by the monitoring server. Specifically, after the third message receiving module receives the request message for changing a type of a decoder to be monitored that is sent by the monitoring server, the second request sending module is specifically configured to send the decoding feature parameter request message to the monitoring server; and the second message receiving module is specifically configured to receive the decoding feature parameter request response message sent by the monitoring server, where the decoding feature parameter request response message includes a decoding feature parameter of the decoder whose type is changed.

For the working principle of the first parameter acquiring unit 52, reference may be made to the description in the method embodiment.

In this embodiment, as shown in FIG. 6, the second parameter acquiring unit 53 includes a loss ratio acquiring module 531, configured to acquire the frame information loss ratio according to the decoding feature parameter; and a parameter acquiring module 532, configured to acquire the MOS-V parameters according to the channel video stream.

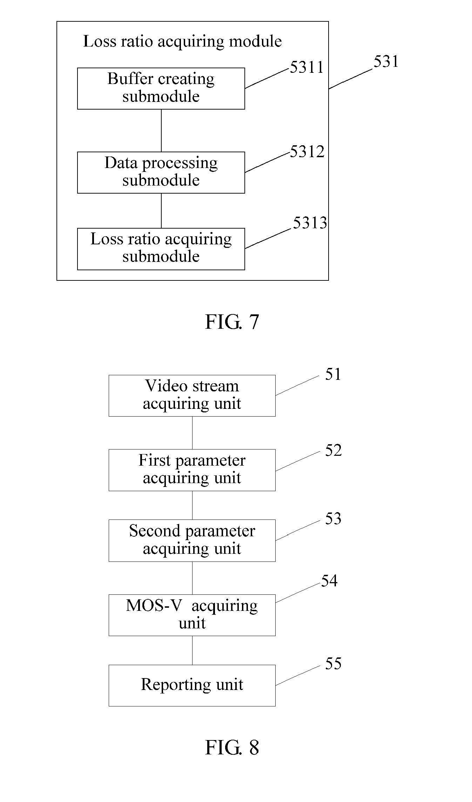

As shown in FIG. 7, the loss ratio acquiring module 531 includes a buffer creating submodule 5311, configured to create a virtual decoding buffer according to the decoding buffer capacity; a data processing submodule 5312, configured to read data in the virtual decoding buffer according to FPS; and a loss ratio acquiring submodule 5313, configured to acquire the frame information loss ratio according to a condition of reading the data.

As shown in FIG. 8, to facilitate video quality monitoring for an operator or another maintenance department, the apparatus for evaluating video quality further includes a reporting unit 55, configured to report the MOS-V value to the monitoring server.

For the working principle of the apparatus, reference may be made to the description in the method embodiment. The apparatus may be located in a network device.

As can be seen from the preceding description, a decoding buffer capacity of a decoder has a great impact on accuracy of a frame information loss ratio. Therefore, the accuracy of the frame information loss ratio may be improved by considering a decoding feature parameter of the decoder during calculation of a MOS-V value, thereby acquiring an accurate MOS-V value. In addition, multiple network devices may be used to monitor video stream information to determine an exact location of a video stream fault. Therefore, accuracy of evaluating quality of an IPTV service is improved by using the apparatus in the embodiment of the present invention.

In conclusion, accuracy of evaluating quality of an IPTV service can be improved by using the technical solutions in the embodiments of the present invention.

The foregoing descriptions are merely specific embodiments of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A method for evaluating video quality, comprising:
acquiring a channel video stream;
acquiring a decoding feature parameter of a decoder, wherein the decoding feature parameter at least comprises a decoding buffer capacity;
acquiring a frame information loss ratio according to the decoding feature parameter, and acquiring mean opinion score-video MOS-V parameters according to the channel video stream; and
acquiring a MOS-V value of the channel video stream according to the frame information loss ratio and the MOS-V parameters.

2. The method according to claim 1, wherein the decoding feature parameter further comprises an error concealment manner; after the acquiring a frame information loss ratio according to the decoding feature parameter, further comprising: acquiring an error concealment manner parameter according to the decoding feature parameter; and
the acquiring a MOS-V value of the channel video stream according to the frame information loss ratio and the MOS-V parameters comprises: acquiring the MOS-V value of the channel video stream according to the frame information loss ratio, the error concealment manner parameter, and the MOS-V parameters.

3. The method according to claim 1 or 2, wherein the acquiring a decoding feature parameter of a decoder comprises:
sending a decoding feature parameter request message to the decoder, and receiving a decoding feature parameter request response message sent by the decoder, wherein the decoding feature parameter request response message comprises the decoding feature parameter; or
receiving a message about joining of the decoder into a multicast group, wherein the message comprises the decoding feature parameter; or
sending a decoding feature parameter request message to a monitoring server, and receiving a decoding feature parameter request response message sent by the monitoring server, wherein the decoding feature parameter request response message comprises the decoding feature parameter.

4. The method according to claim 3, before the sending a decoding feature parameter request message to a monitoring server, further comprising:
receiving a request message for changing a type of a decoder to be monitored that is sent by the monitoring server; wherein
the receiving a decoding feature parameter request response message sent by the monitoring server, wherein the decoding feature parameter request response message comprises the decoding feature parameter comprises:
receiving the decoding feature parameter request response message sent by the monitoring server, wherein the decoding feature parameter request response message comprises a decoding feature parameter of the decoder whose type is changed.

5. The method according to any one of claims 1-4, wherein the acquiring a frame information loss ratio according to the decoding feature parameter comprises:
creating a virtual decoding buffer according to the decoding buffer capacity;
reading data in the virtual decoding buffer according to frames per second FPS; and
acquiring the frame information loss ratio according to a condition of reading the data.

6. An apparatus for evaluating video quality, comprising:
a video stream acquiring unit, configured to acquire a channel video stream;
a first parameter acquiring unit, configured to acquire a decoding feature parameter of a decoder, wherein the decoding feature parameter at least comprises a decoding buffer capacity;
a second parameter acquiring unit, configured to acquire a frame information loss ratio according to the decoding feature parameter, and acquire MOS-V parameters according to the channel video stream; and
a MOS-V value acquiring unit, configured to acquire a MOS-V value of the channel video stream according to the frame information loss ratio and the MOS-V parameters.

7. The apparatus according to claim 6, wherein the decoding feature parameter further comprises an error concealment manner; the second parameter acquiring unit is specifically configured to acquire the frame information loss ratio and an error concealment manner parameter according to the decoding feature parameter; and the MOS-V value acquiring unit is specifically configured to acquire the MOS-V value of the channel video stream according to the frame information loss ratio, the error concealment manner parameter, and the MOS-V parameters.

8. The apparatus according to claim 6 or 7, wherein the first parameter acquiring unit comprises: a first request sending module, configured to send a decoding feature parameter request message to the decoder; and a first message receiving module, configured to receive a decoding feature parameter request response message sent by the decoder, wherein the decoding feature parameter request response message comprises the decoding feature parameter; or
the first parameter acquiring unit is specifically configured to receive a message about joining of the decoder into a multicast group, wherein the message comprises the decoding feature parameter; or the first parameter acquiring unit comprises: a second request sending module, configured to send a decoding feature parameter request message to a monitoring server; and a second message receiving module, configured to receive a decoding feature parameter request response message sent by the monitoring server, wherein the decoding feature parameter request response message comprises the decoding feature parameter.

9. The apparatus according to claim 8, wherein the first parameter acquiring unit further comprises: a third message receiving module, configured to receive a request message for changing a type of a decoder to be monitored that is sent by the monitoring server; the second request sending module is specifically configured to send the decoding feature parameter request message to the monitoring server; and the second message receiving module is specifically configured to receive the decoding feature parameter request response message sent by the monitoring server, wherein the decoding feature parameter request response message comprises a decoding feature parameter of the decoder whose type is changed.

10. The apparatus according to any one of claims 6-9, wherein the second parameter acquiring unit comprises:
a loss ratio acquiring module, configured to acquire the frame information loss ratio according to the decoding feature parameter; and
a parameter acquiring module, configured to acquire the MOS-V parameters according to the channel video stream.

11. The apparatus according to claim 10, wherein the loss ratio acquiring module comprises:
a buffer creating submodule, configured to create a virtual decoding buffer according to the decoding buffer capacity;
a data processing submodule, configured to read data in the virtual decoding buffer according to FPS; and
a loss ratio acquiring submodule, configured to acquire the frame information loss ratio according to a condition of reading the data.
